# EUROPÄISCHE PATENTSCHRIFT

(11) **EP 0 827 879 B1**
(45) Veröffentlichungstag und Bekanntmachung des Hinweises auf die Patenterteilung: **10.01.2001**
(21) Anmeldenummer: 97113096.8
(22) Anmeldetag: 30.07.1997
(51) Int. Cl.: B60R 21/22

(54) **Rückhaltesystem für Fahrzeuginsassen**
Vehicle occupant restraint system
Système de retenue d'un passager de véhicule

(30) Priorität: 05.09.1996 DE 29615485 U
(43) Veröffentlichungstag der Anmeldung: 11.03.1998
(73) Patentinhaber: TRW Occupant Restraint Systems GmbH & Co. KG, 73551 Alfdorf (DE)
(72) Erfinder: Böcker, Dietmar, 65189 Wiesbaden (DE); Eyrainer, Heinz, 73550 Waldstetten (DE)
(74) Vertreter: Kitzhofer, Thomas, Dipl.-Ing.

(56) Entgegenhaltungen:
- WO-A-93/09977
- WO-A-96/26087
- DE-A- 4 337 656
- DE-A- 19 519 297
- DE-A- 19 547 494
- DE-U- 9 211 423
- GB-A- 2 278 812

## Beschreibung

Die Erfindung betrifft ein Rückhaltesystem für Fahrzeuginsassen, insbesondere zum seitlichen Rückhalten von Insassen, mit einem aufblasbaren Gassack mit einer Einrichtung mit einem Federantrieb, die am Gassack angreift, ihn im Rückhaltefall in die in vollständig aufgeblasenem Zustand gewünschte Lage zieht und ihn in dieser Lage hält, wenn der Fahrzeuginsasse auf den Gassack auftrifft.

Ein aufgeblasener Gassack muß im Rückhaltefall die beim Auftreffen des Fahrzeuginsassen auf ihn einwirkenden Kräfte aufnehmen und in das Fahrzeug einleiten. Ein bei einem Frontalaufprall schützender Gassack stützt sich hierzu an der Lenkradnabe oder am Armaturenbrett, abhängig davon, ob es sich um einen Fahrer- oder Beifahrer-Gassack handelt, ab. Ein kissenförmiger Kopf-Gassack als Teil eines seitlich wirkenden Rückhaltesystems ist aus dem DE-U 92 11 423 bekannt. Hierbei ist ein Kopf-Gassack unter der Verkleidung des Dachrahmens angeordnet, der im Kollisionsfall aus dieser austritt. Ösen am äußeren Umfangsrand des Gassacks umschließen ein längs der B-Säule angeordnetes Seil. Beim Entfalten des Gassacks dient das Seil als Führung für den Gassack, der sich dadurch seitlich geführt nach unten ausbreitet, bis er eine definierte Endposition eingenommen hat. Vor und während des Auftreffens des Insassen auf den beim Rückhaltesystem nach dem DE-U 92 11 423 vorgesehenen Gassack kann sich dieser längs der Seilführung bewegen und teilweise seine Lage verändern, was unerwünscht ist.

Die DE-A-195 19 297 beschreibt ein gattungsgemäßes Rückhaltesystem mit einem Gassack, der durch eine pyrotechnisch oder durch Federkraft betriebene Straffeinrichtung in die gewünschte Lage gezogen wird. Die Straffeinrichtung wird über ein Signal von dem Sensor ausgelöst, der auch den Gasgenerator zur Befüllung des Gassackes auslöst. Die Auslösezeitpunkte des Gassackes und der Straffeinrichtung müssen aufeinander abgestimmt werden.

Ferner sind kissenförmige Seiten-Gassäcke bekannt, die sich im Rückhaltefall an der Seitenscheibe des Fahrzeugs abstützen. Zersplittert jedoch bei einem seitlichen Aufprall die Scheibe, fehlt dem Gassack großteils die Abstützung, so daß seine Rückhaltewirkung zumindest stark eingeschränkt ist.

Die Erfindung schafft ein Rückhaltesystem mit einem Gassack, der im aufgeblasenen Zustand lagefest positioniert ist und der sich nicht an der Seitenscheibe abstützen muß, und bietet eine einfache Möglichkeit, die Einrichtung, die den Gassack im Rückhaltefall in die gewünschte Lage zieht, auszulösen. Das erfindungsgemäße Rückhaltesystem weist hierzu eine Verriegelungseinheit auf, die durch das Entfalten des Gassackes aus einer Sperrstellung in eine Freigabestellung verschoben wird, in der die Federenergie freigegeben wird.

Bei einem Federantrieb ist die Verwendung einer Verriegelungseinrichtung vorteilhaft, die durch das Entfalten des Gassackes aus einer Sperr- in eine Freigabestellung verschoben werden kann, in welcher die Federenergie freigegeben wird. So müssen keine separaten Auslösemechanismen vorgesehen sein, denn der Federantrieb ist an die Gassackbewegung zwangsgekoppelt, so daß das Entfalten des Gassacks das Betätigen des Federantriebs auslöst.

Die Einrichtung hält den Gassack auch in der gewünschten Endposition so daß die Einrichtung auch wenigstens einen Teil der auf den Gassack einwirkenden Kräfte beim Auftreffen des Fahrzeuginsassen aufnimmt. Obwohl das erfindungsgemäße Rückhaltesystem vorzugsweise bei einer Seitenaufprall-Schutzeinrichtung verwendet wird, kann es ebenso z.B. bei einem Knie-Gassack oder bei einem im Lenkrad oder in der Armaturentafel eingebauten Gassack verwendet werden, wenn es darum geht, den Gassack exakt und lagesicher zu positionieren.

Bei der bevorzugten Ausführungsform bringt die Einrichtung auf den Gassack in seiner endgültigen Lage eine Zugkraft auf, und der aufgeblasene Gassack wird dadurch zwischen Lagerungsstellen an seinem Umfangsrand im Fahrzeug gespannt, so daß er trotz einer Fahrzeugverformung stets lagesicher im Fahrzeug vergleichbar einem Fangband aufgespannt ist.

Eine vorgesehene Rücklaufsperre hält den Gassack in der gewünschten Lage und verhindert damit eine erhebliche Verlagerung des Gassacks z.B. durch eine Verformung bei einem Aufprall oder durch den auftreffenden Fahrzeuginsassen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 ein erfindungsgemäßes Rückhaltesystem für Fahrzeuginsassen, mit einem aufblasbaren Seiten-Kopf-Gassack in nicht aktiviertem Zustand,

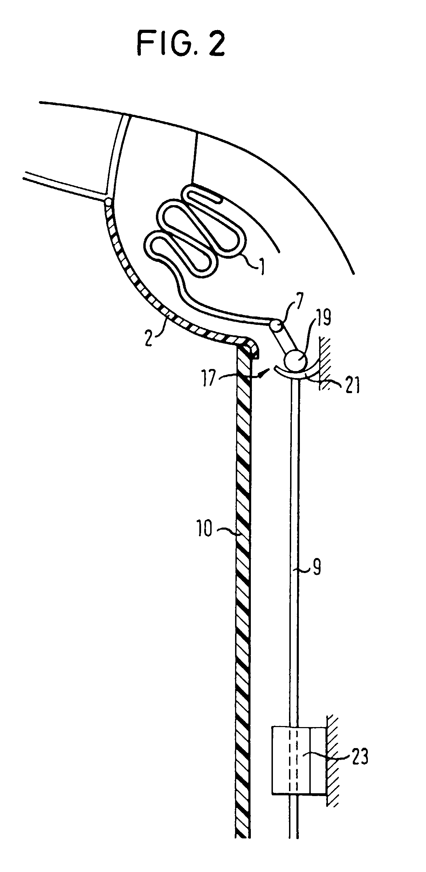

- Fig. 2 eine Querschnittsansicht durch das Fahrzeug im Bereich des Dachrahmens und des oberen Teils der B-Säule, die das erfindungsgemäße Rückhaltesystem deutlicher zeigt,
- Fig. 3 eine Querschnittsansicht des erfindungsgemäßen Rückhaltesystems mit teilweise aufgeblasenem Gassack, und
- Fig. 4 eine Seitenansicht des erfindungsgemäßen Rückhaltesystems mit vollständig aufgeblasenem Gassack.

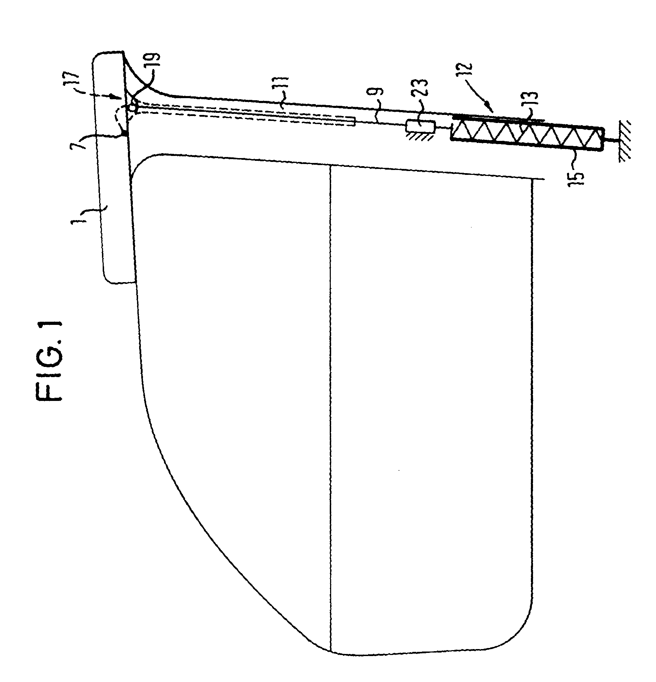

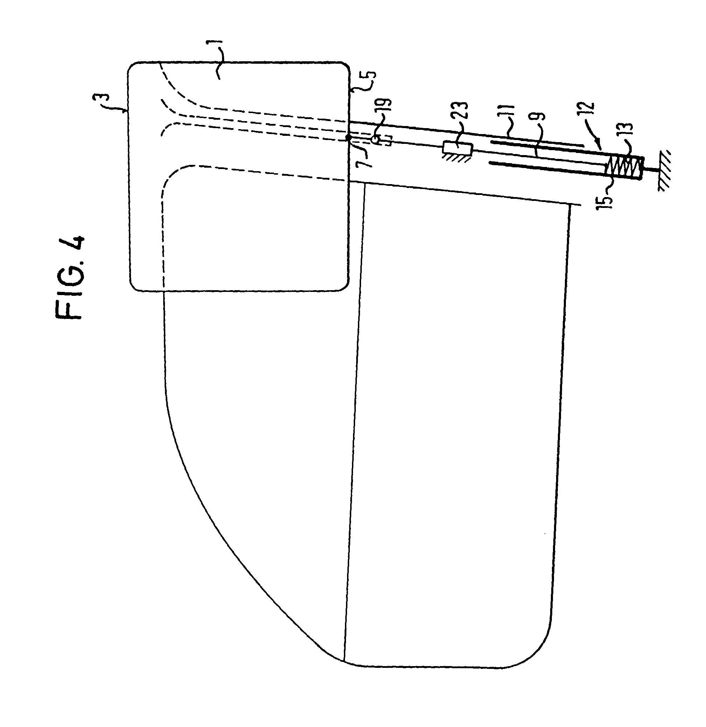

Fig. 1 zeigt ein Rückhaltesystem, das einen Fahrzeuginsassen bei einem Seitenaufprall oder einem Überschlag vor Kopfverletzungen schützen soll. Das Rückhaltesystem umfaßt einen unterhalb der Verkleidung 2 im Bereich des Dachrahmens eingebauten großflächigen, kissenförmigen Gassack 1. Der Gassack 1 ist, bezogen auf den in Fig. 4 gezeigten entfalteten Zustand, im Bereich seines oberen Umfangsrandes 3 am Dachrahmen befestigt. Am unteren Umfangsrand 5 ist eine Öse 7 vorgesehen, an der ein Zugseil 9 befestigt ist. Das Zugseil 9 erstreckt sich hinter der Verkleidung 10 der B-Säule 11 vertikal in Richtung Fahrzeugboden, wo es an einer im nicht betätigten Zustand des Rückhaltesystems gespannten Zugfeder 13 befestigt ist, die in einem Zylinder 15 aufgenommen ist. Das untere Ende der Zugfeder 13 und des Zylinders 15 ist jeweils am Fahrzeugboden arretiert. Um zu verhindern, daß die vorgespannte Zugfeder 13 den gefalteten Gassack 1 im nicht aktivierten Zustand aus der Verkleidung 2 herauszieht, ist im oberen Bereich der B-Säule 11 eine Verriegelungseinrichtung 17 vorgesehen, die ein Bewegen des Zugseils 9 nach unten verhindert. Die Verriegelungseinrichtung 17 besteht aus einem am Zugseil 9 befestigten Sperrkörper 19 in Form einer Kugel, der gegen eine fahrzeugfeste, pfannenartige Anlagefläche 21 angedrückt wird und dadurch ein Bewegen des Zugseils 9 nach unten verhindert.

Eine Rücklaufsperre 23 in Form eines Klemmgesperres, durch das das Zugseil 9 hindurchgeführt ist, läßt ein Bewegen des Zugseils 9 nach unten, jedoch nicht ein Zurückziehen des Zugseils 9 nach oben zu.

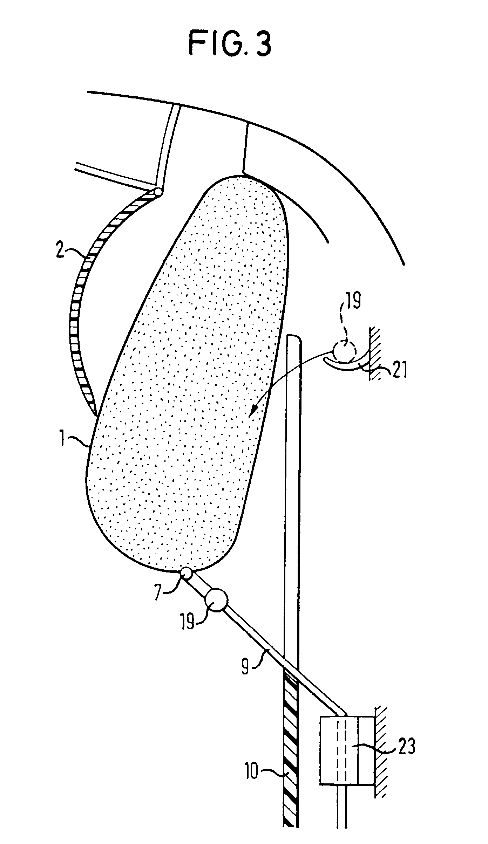

Im Kollisionsfall wird über einen Beschleunigungssensor ein nicht gezeigter Gasgenerator gezündet, der den Gassack 1 aufbläst. Während des Aufblasvorgangs klappt der Gassack 1 die Verkleidung 2 auf (vgl. Fig. 3). Durch die Veränderung der Gestalt des Gassacks 1 wird auch die Öse 7 seitlich bewegt, da sie seitlich von der Anlagefläche 21 beabstandet ist. Der Sperrkörper 19 wird durch das Aufblasen des Gassacks 1 aus der Anlagefläche 21 gezogen (vgl. Pfeil in Fig. 3) und kommt frei, so daß noch während des Aufblasvorgangs die gespeicherte Federenergie freigegeben und das Zugseil 9 nach unten bewegt wird. Die Verkleidung 10 der B-Säule 11 reißt dabei, wie Fig. 3 zu entnehmen ist, längs einer vorbestimmten Linie auf. Die aus dem Zugseil 9, dem Antrieb 12, der Verriegelungseinrichtung 17 und der Rücklaufsperre 23 gebildete Einrichtung beschleunigt das Entfalten des Gassacks 1 und führt diesen in seine gewünschte Lage in vollständig aufgeblasenem Zustand, vgl. Fig. 4, in dem er eine kissenförmige Gestalt hat. Auch in vollständig aufgeblasenem Zustand ist noch genügend Federkraft vorhanden, um den Gassack 1 zwischen den Lagerungsstellen am oberen Umfangsrand 3 und der Öse 7, die ebenfalls eine Lagerungsstelle bildet, zu spannen. Dadurch wird der Gassack 1 lagesicher im Fahrzeug fixiert, und er muß sich nicht an der eventuell zerborstenen Seitenscheibe abstützen, wenn der Insasse auf den Gassack 1 trifft.

Die Rücklaufsperre 23 verhindert ein Verlagern des Zugseils 9 beim Auftreffen des Kopfs des Insassen, so daß ein Verschieben des Gassacks 1 nicht möglich ist. Bei höheren, durch den Antrieb 12 auf den Gassack 1 aufgebrachten Zugkräften kann dieser auch in seiner Gestalt verändert werden.

Die das Entfalten des Gassacks 1, seine Lage und gegebenenfalls seine Gestalt definierende Einrichtung ist nicht nur auf die Verwendung bei einem kissenförmigen Kopfgassack seitlich des Fahrzeuginsassen eingeschränkt, sondern sie kann ebenso beispielsweise bei einem Knie-Gassack verwendet werden, bei dem der Gassack aus dem unteren Bereich der Armaturentafel, die den Fußraum umgibt, austritt und durch die Einrichtung in eine Position unmittelbar vor die Knie des Insassen gezogen und quer zu ihnen gespannt wird.

## Patentansprüche

1. Rückhaltesystem für Fahrzeuginsassen, insbesondere zum seitlichen Rückhalten des Insassen, mit einem aufblasbaren Gassack (1), mit einer Einrichtung (9, 12) mit einem Federantrieb (12), die am Gassack (1) angreift, ihn im Rückhaltefall in die in vollständig aufgeblasenem Zustand gewünschte Lage zieht und ihn in dieser Lage hält, wenn der Fahrzeuginsasse auf den Gassack (1) auftrifft, dadurch gekennzeichnet, daß eine Verriegelungseinrichtung (17) vorgesehen ist, die durch das Entfalten des Gassacks (1) aus einer Sperrstellung in eine Freigabestellung verschoben wird, in der die Federenergie freigegeben wird.

2. Rückhaltesystem nach Anspruch 1, dadurch gekennzeichnet, daß die Einrichtung ein am Gassack (1) angreifendes Zugseil (9) umfaßt und daß der Federantrieb (12) mit diesem gekoppelt ist.

3. Rückhaltesystem nach Anspruch 2, dadurch gekennzeichnet, daß die Verriegelungseinrichtung (17) einen mit dem Zugseil (9) verbundenen Sperrkörper (19) aufweist, der in der Sperrstellung gegen eine fahrzeugfeste Anlagefläche (21) gedrückt wird und sich durch das Aufblasen des Gassacks (1) aus der Anlagefläche (21) bewegt und freikommt.

4. Rückhaltesystem nach einem der vorhergehenden Ansprüche, dadurch gekennzeichnet, daß die Einrichtung auf den Gassack (1) in dessen endgültiger Lage eine Zugkraft aufbringt und der aufgeblasene Gassack (1) dadurch zwischen Lagerungsstellen an seinem Umfangsrand (3, 5) im Fahrzeug gespannt ist.

5. Rückhaltesystem nach Anspruch 4, dadurch gekennzeichnet, daß die auf den Gassack (1) aufgebrachte Zugkraft so groß ist, daß die Einrichtung auch die Gestalt des aufgeblasenen Gassacks (1) mitbestimmt.

6. Rückhaltesystem nach Anspruch 4 oder 5, dadurch gekennzeichnet, daß der Gassack durch wenigstens eine fahrzeugfeste Lagerungsstelle an seinem Umfangsrand (3) am Fahrzeug starr befestigt ist und daß die Einrichtung an einem der Lagerungsstelle gegenüberliegenden Bereich des Umfangsrandes (5) am Gassack (1) angreift.

7. Rückhaltesystem nach einem der vorstehenden Ansprüche, dadurch gekennzeichnet, daß die Einrichtung eine Rücklaufsperre (23) aufweist, die den aufgeblasenen Gassack (1) in seiner endgültigen Lage hält.

8. Rückhaltesystem nach Anspruch 7, dadurch gekennzeichnet, daß die Rücklaufsperre (23) ein am Zugseil (9) angreifendes Klemmgesperre ist.

9. Rückhaltesystem nach einem der vorstehenden Ansprüche, dadurch gekennzeichnet, daß der Gassack (1) ein im Dachrahmen untergebrachter, kissenförmiger Kopf-Gassack ist, der im Bereich seines oberen Umfangsrandes (3) am Fahrzeug befestigt ist und an dessen unterem Umfangsrand (5) die Einrichtung angreift.

10. Rückhaltesystem nach einem der vorstehenden Ansprüche, dadurch gekennzeichnet, daß die Einrichtung hinter der Verkleidung (10) der B-Säule (11) des Fahrzeugs angeordnet ist.

## Claims

1. A vehicle occupant restraint system, particularly for vehicle occupant side restraint, comprising an inflatable gas bag (1), a means (9, 12) including a spring drive (12) and engaging the gas bag (1), which means pulls the gas bag, in a restraint situation, into the position desired in the fully inflated state and maintains it in this position when the vehicle occupant impacts the gas bag (1), characterized in that a latching means (17) is provided which, due to deployment of the gas bag (1), is shifted from a locked position into a release position in which the spring energy is liberated.

2. The restraint system as set forth in claim 1, characterized in that the means comprises a traction cable (9) engaging the gas bag (1) and that the spring drive (12) is coupled to the traction cable.

3. The restraint system as set forth claim 2, characterized in that the latching means (17) comprises a locking body (19) connected to the traction cable (9), the locking body being urged against a vehicle-fixed contact surface (21) in the locked position and is moved and released from said contact surface (21) by inflation of the gas bag (1).

4. The restraint system as set forth in any of the preceding claims, characterized in that the means exerts a tensile force on the gas bag (1) in the final position thereof, as a result of which the inflated gas bag (1) is tensioned between mounting points at its peripheral edge (3, 5) in the vehicle.

5. The restraint system as set forth in claim 4, characterized in that the tensile force exerted on the gas bag (1) is so great that the means also contributes to determining the shape of the inflated gas bag (1).

6. The restraint system as set forth in claim 4 or 5, characterized in that the gas bag on its peripheral edge is rigidly secured to the vehicle by at least one vehicle-fixed mounting point and that the means engages the gas bag (1) at a region of the peripheral edge (5) opposing the mounting point.

7. The restraint system as set forth in any of the preceding claims, characterized in that the means comprises a return lock (23) which maintains the inflated gas bag (1) in its final position.

8. The restraint system as set forth in claim 7, characterized in that the return lock (23) is a clamp locking mechanism engaging the traction cable (9).

9. The restraint system as set forth in any of the preceding claims, characterized in that the gas bag (1) is a cushion-shaped head gas bag which is accommodated in the roof frame, is secured to the vehicle in the region of its upper peripheral edge (3) and is engaged by the means at its lower peripheral edge (5).

10. The restraint system as set forth in any of the preceding claims, characterized in that the means is arranged behind the cover (10) of the B-pillar (11) of the vehicle.

## Revendications

1. Système de retenue pour occupant d'un véhicule, en particulier pour la retenue latérale de l'occupant, comprenant un coussin à gaz gonflable (1), un dispositif (9, 12) à moyen d'entraînement élastique (12) qui agit sur le coussin à gaz (1), le tire, en cas de retenue, dans la position souhaitée à l'état totalement gonflé et le maintient dans cette position lorsque l'occupant du véhicule heurte le coussin à gaz (1), caractérisé en ce qu'il est prévu un dispositif de verrouillage (17) qui est déplacé, par le déploiement du coussin à gaz (1), d'une position de blocage à une position de libération dans laquelle l'énergie élastique est libérée.

2. Système de retenue selon la revendication 1, caractérisé en ce que le dispositif comprend un câble de traction (9) qui agit sur le coussin à gaz (1), et en ce que le moyen d'entraînement élastique (12) est accouplé audit câble de traction (9).

3. Système de retenue selon la revendication 2, caractérisé en ce que le dispositif de verrouillage (17) comporte un corps d'arrêt (19) qui est relié au câble de traction (9) et qui, en position de blocage, est poussé contre une surface d'appui (21) solidaire du véhicule et, par suite du gonflage du coussin à gaz (1), quitte la surface d'appui (21) et est libéré.

4. Système de retenue selon l'une des revendications précédentes, caractérisé en ce que le dispositif exerce une force de traction sur le coussin à gaz (1) parvenu en position définitive, et le coussin à gaz gonflé (1) est ainsi déployé dans le véhicule entre des points d'appui situés sur son bord périphérique (3, 5).

5. Système de retenue selon la revendication 4, caractérisé en ce que la force de traction exercée sur le coussin à gaz (1) est telle que le dispositif détermine aussi la forme du coussin à gaz gonflé (1).

6. Système de retenue selon la revendication 4 ou 5, caractérisé en ce que le coussin à gaz est fixé de manière rigide au véhicule au niveau de son bord périphérique (3) par au moins un point d'appui solidaire du véhicule, et en ce que le dispositif agit sur le coussin à gaz (1) dans une zone du bord périphérique (5) située à l'opposé du point d'appui.

7. Système de retenue selon l'une des revendications précédentes, caractérisé en ce que le dispositif comporte un dispositif antiretour (23) qui maintient le coussin à gaz gonflé (1) dans sa position définitive.

8. Système de retenue selon la revendication 7, caractérisé en ce que le dispositif antiretour (23) est un verrou de serrage agissant sur le câble de traction (9).

9. Système de retenue selon l'une des revendications précédentes, caractérisé en ce que le coussin à gaz (1) est un coussin à gaz de protection de tête en forme d'oreiller qui est logé dans le cadre de toit, qui est fixé au véhicule dans la zone de son bord périphérique supérieur (3), et sur le bord périphérique inférieur (5) duquel agit le dispositif.

10. Système de retenue selon l'une des revendications précédentes, caractérisé en ce que le dispositif est disposé derrière l'habillage (10) de la colonne B (11) du véhicule.
